# DEMANDE DE BREVET EUROPEEN

(11) **EP 4 435 937 A1**
(43) Date de publication de la demande: **25.09.2024**
(21) Numéro de dépôt: 23305400.6
(22) Date de dépôt: 23.03.2023
(51) Int. Cl.: H01M 50/103, H01M 50/119, H01M 50/474, H01M 50/477, H01M 50/486, H01M 50/593

(54) **CELLULE DE STOCKAGE D ÉNERGIE ET PROCÉDÉ D'ASSEMBLAGE ASSOCIÉ**

(71) Demandeur: Automotive Cells Company SE, 33520 Bruges (FR)
(72) Inventeur: MATHIEU, Alexandre, Pierre, Maurice, 33300 BORDEAUX (FR); ARDRINO, Thomas, 33320 EYSINES (FR)
(74) Mandataire: Lavoix

(57) **Abrégé**

La cellule de stockage d'énergie comporte un module électrique comprenant :
- un empilement de feuillets d'électrode (30),
- une enveloppe de protection entourant l'empilement de feuillets d'électrode (30), l'enveloppe comportant au moins un flan replié autour de l'empilement de feuillets d'électrode (30).

Suivant au moins une face du module électrique, le flan présente au moins deux pans (60, 64) repliés l'un sur l'autre et se chevauchant sur l'essentiel de leur surface.

## Description

La présente invention concerne une cellule de stockage d'énergie du type comportant un module électrique comprenant :
- un empilement de feuillets d'électrode,
- une enveloppe de protection entourant l'empilement de feuillets d'électrode, l'enveloppe comportant au moins un flan replié autour de l'empilement de feuillets d'électrode.

Une cellule de stockage d'énergie est un assemblage permettant la transformation d'une énergie provenant d'une réaction chimique en énergie électrique, et son subséquent stockage. Elle comporte un ensemble de feuillets d'électrode empilés, connectés ensemble et baignant dans un électrolyte.

Il est connu, de CN216958446, une cellule de stockage d'énergie comportant un module électrique comprenant un empilement de feuillets d'électrode et une couche plastique de protection de l'empilement de feuillets d'électrode. Le module électrique est reçu dans un boitier métallique. Un support de fond est interposé entre le fond du boitier métallique et le module électrique. La couche plastique de protection interne de l'empilement de feuillets d'électrode est repliée autour de l'empilement de feuillets d'électrode. Le support de fond est soudé par thermofusion avec une face inférieure de la couche plastique de protection.

Les rayons de courbure de chacun des angles du boitier métallique, notamment dus aux congés engendrés par le procédé de fabrication, peuvent endommager par déformation l'empilement de feuillets d'électrode.

Le support de fond, de par son architecture, a pour fonction de limiter le contact entre l'empilement de feuillets d'électrode et le boitier métallique pour éviter un potentiel endommagement du module électrique.

Cette solution protège effectivement l'empilement de feuillets d'électrode d'un endommagement par contact avec le boitier métallique mais représente une solution couteuse.

L'invention a pour but d'éviter tout contact entre le fond du boitier métallique et l'empilement de feuillets d'électrode à moindre coût, afin de limiter l'endommagement de l'empilement de feuillets d'électrode.

A cet effet, l'invention a pour objet une cellule de stockage d'énergie du type précité caractérisée en ce que suivant au moins une face du module électrique, le flan présente au moins deux pans repliés l'un sur l'autre et se chevauchant sur l'essentiel de leur surface.

Le fond de protection étant venu de matière avec le reste de l'enveloppe de protection, les coûts engendrés par cette solution sont moindres par rapport à ceux engendrés par la fabrication d'un support de fond additionnel. De plus, la pluralité d'épaisseurs de l'enveloppe de protection entre le fond du boitier métallique et l'empilement de feuillets d'électrode empêche tout contact qui pourrait être endommageant pour l'empilement de feuillets d'électrode.

Suivant des modes particuliers de réalisation, la cellule de stockage selon l'invention comprend l'une ou plusieurs des caractéristiques suivantes, prise(s) isolément ou suivant toutes combinaisons techniquement possibles :
- les deux pans repliés l'un sur l'autre sont à l'écart l'un de l'autre suivant l'étendue du flan ;
- au moins un pan replié est prolongé par au moins un prolongement replié sur l'essentiel de la surface du pan replié ;
- le module électrique a une forme parallélépipédique et le flan délimite quatre faces principales successives deux à deux opposées, l'une des faces présentant les au moins deux pans repliés l'un sur l'autre ;
- le module électrique comporte des pattes de connexion reliant les feuillets d'électrode entre eux et étant prolongées par des bornes de connexion de la cellule, et l'enveloppe de protection comporte des ouvertures de passage des pattes de connexion ;
- le flan comporte des rabats adjacents à au moins une des faces principales, lesquels rabats sont repliés à 90° par rapport aux faces principales et délimitent les ouvertures de passage des pattes de connexion ;
- les bornes de connexion s'étendent sur l'une des faces principales ;
- les pans repliés l'un sur l'autre comportent des trous ;
- l'enveloppe de protection est en polyéthylène et/ou en polytéréphtalate d'étylène et/ou en polypropylène ; et
- la cellule de stockage d'énergie comporte un boitier métallique contenant le module électrique, la face du module présentant au moins deux flancs étant en contact avec le boitier métallique.

L'invention concerne également un procédé d'assemblage d'une cellule de stockage d'énergie du type précité, comprenant les étapes :
- fourniture de l'empilement de feuillets d'électrode ; et
- mise en forme par pliage d'un flan en une enveloppe de protection de l'empilement de feuillets d'électrode,
caractérisé en ce qu'il comporte le repli l'un sur l'autre d'au moins deux pans du flan suivant au moins une face du module électrique, les pans repliés se chevauchant sur l'essentiel de leur surface.

L'invention sera mieux comprise à la lecture de la description qui va suivre, donnée uniquement à titre d'exemple, et faite en se référant aux dessins annexés, sur lesquels :
- [Fig.1] La figure 1 est une vue en perspective de la cellule de stockage,
- [Fig.2] La figure 2 est une vue en perspective de l'enveloppe de protection mise côte à côte avec l'empilement de feuillets d'électrode enveloppé d'un préemballage de protection,
- [Fig.3] La figure 3 est une vue de dessus du flan formant l'enveloppe de protection, à plat, avant sa mise en forme en l'enveloppe de protection,
- [Fig.4] La figure 4 est une vue prise en coupe selon le plan IV-IV perpendiculaire aux faces principales de l'enveloppe de protection de la figure 2, et
- [Fig.5] La figure 5 est une vue partielle en perspective de l'enveloppe de protection.

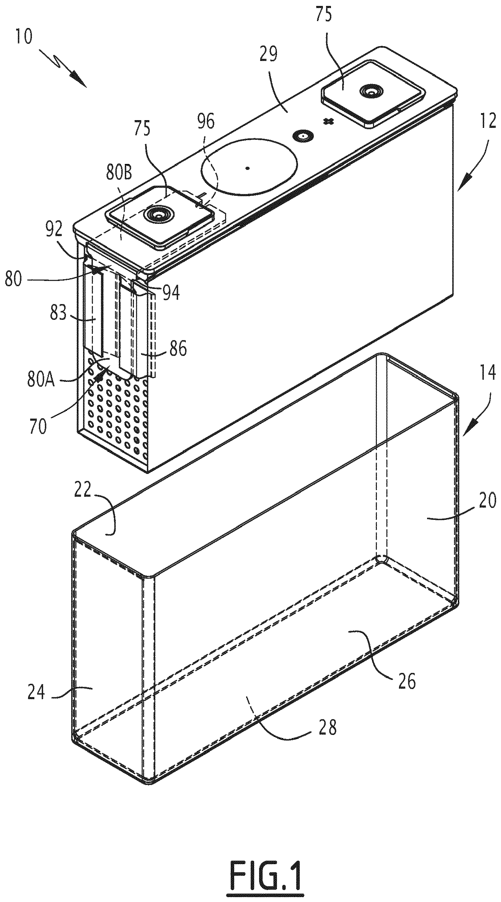

La figure 1 illustre une cellule de stockage d'énergie 10.

La cellule de stockage d'énergie 10 comporte un module électrique 12 et un boitier métallique 14 de réception du module 12. Le boitier métallique 14 possède quatre faces latérales 20, 22, 24, 26, un fond 28 et un couvercle rapporté 29 visible au-dessus du module électrique 12. Le boitier métallique 14 est étanche et empli d'un électrolyte dans lequel baigne le module 12.

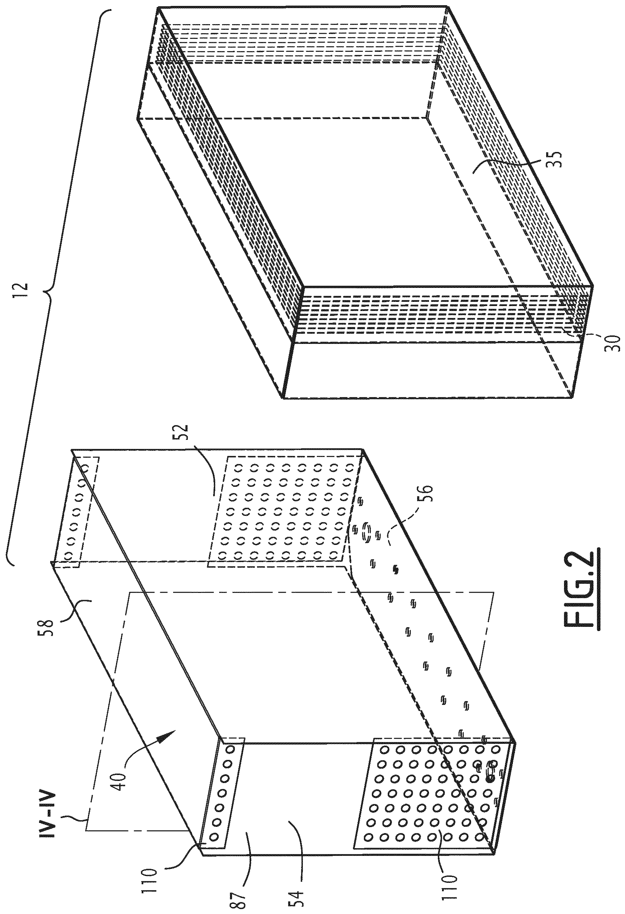

Comme visible sur la figure 2, le module électrique 12 comporte un empilement de feuillets d'électrode 30. Il est de forme parallélépipédique, et est entièrement enveloppé par un préemballage de protection 35. Le préemballage de protection 35 est fait d'un film de polymère et est avantageusement poreux et perméable à l'électrolyte.

Le module électrique 12 comporte également une enveloppe de protection 40 entourant l'empilement de feuillets d'électrode 30 préemballé. Sur la figure 2, l'enveloppe 40 est représentée à l'écart de l'empilement de feuillets d'électrode 30 préemballé.

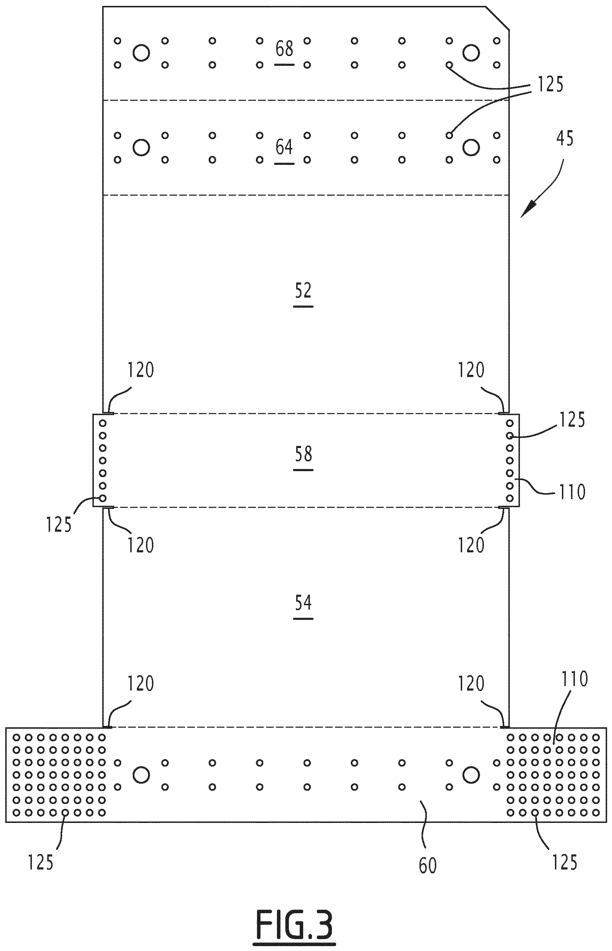

L'enveloppe de protection 40 est formée à partir d'un flan unique 45 replié autour de l'empilement de feuillets d'électrode 30 préemballé. Le flan 45 est représenté seul à plat avant pliage sur la figure 3.

Le flan 45 délimite quatre faces principales successives deux à deux opposées, à savoir, deux faces latérales principales 52, 54, un fond 56 et une face supérieure 58.

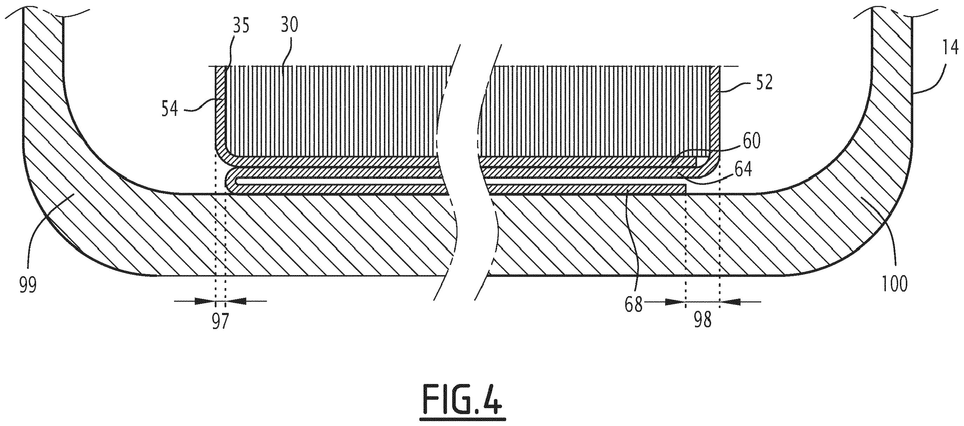

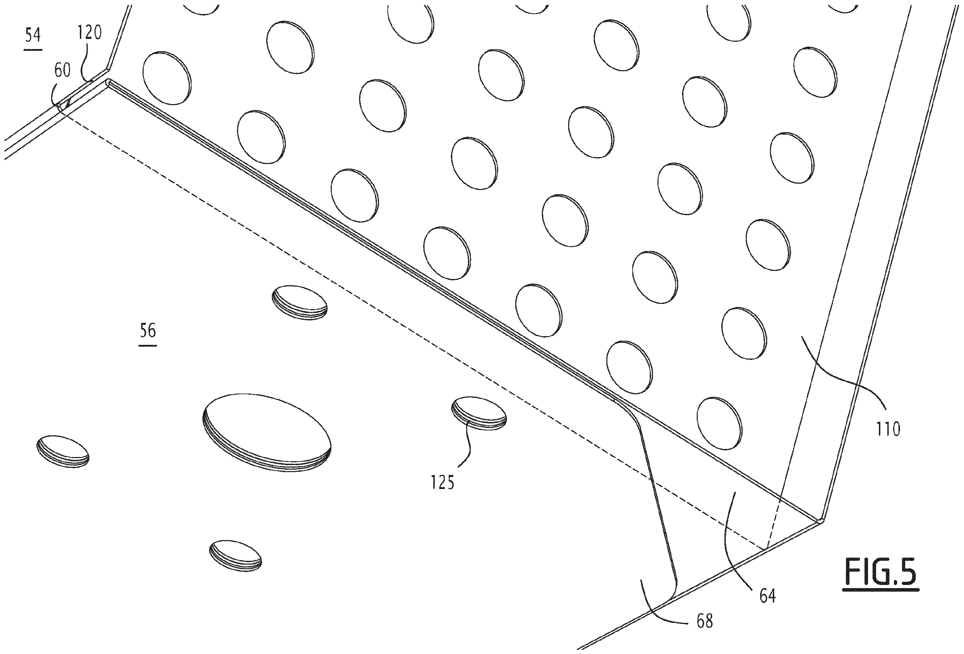

Suivant le fond 56, l'enveloppe de protection 40 présente deux pans 60, 64 du flan repliés l'un sur l'autre et se chevauchant sur l'essentiel de leur surface, comme visible sur les figures 4 et 5. Les deux pans 60, 64 repliés l'un sur l'autre sont à l'écart l'un de l'autre suivant l'étendue du flan, comme illustré sur la figure 3, c'est-à-dire qu'ils ne sont pas liés l'un à l'autre par une ligne de pliage et qu'ils ne sont pas adjacents. Ils sont ainsi disjoints.

Le pan replié 64 est prolongé par un prolongement 68 replié sur l'essentiel de la surface du pan replié 64. Le prolongement 68 a un pan coupé, au sens qu'un de ses angles délimitant l'extrémité du flan 45 est coupé, comme visible sur les figures 3 et 5.

Le pan 64 et son prolongement 68 sont repliés par-dessus le pan 60. En d'autres termes, lorsque le flan 45 est mis en forme en l'enveloppe de protection 40 entourant l'empilement de feuillets d'électrode 30 préemballé, le pan 60 est en contact avec le préemballage 35, comme visible sur la figure 4, et le pan replié 64 et son prolongement 68 sont à l'extérieur du pan 60.

Comme illustré sur la figure 1, le module électrique 12 comporte deux pattes de connexion 70 reliant ensemble les feuillets d'électrode 30 de même polarité suivant des faces latérales partiellement ouvertes perpendiculaires aux faces latérales principales 52, 54. Les pattes de connexion 70 se prolongent par des bornes de connexion 75 du module 12. Les bornes 75 font saillies sur le couvercle 29 du boitier métallique 14 contenant le module 12.

Chaque patte de connexion 70 comprend une équerre 80 enchâssée entre deux assemblages de languettes 83, 86. Les assemblages de languettes 83, 86 sont la superposition de languettes flexibles issues de l'empilement de feuillets d'électrode 30 regroupées pour assurer une connexion électrique entre l'empilement de feuillets d'électrode 30 et les bornes de connexion 75. Les assemblages de languettes 83, 86 s'étendent au travers d'ouvertures 87 de passage ménagées dans les faces latérales partiellement ouvertes de l'enveloppe de protection 40.

L'équerre 80 présente deux branches 80A et 80B perpendiculaires entre elles. La branche 80B s'étend entre la face supérieure 58 de l'enveloppe de protection 40 et le couvercle rapporté 29. La branche 80A s'étend dans le plan de l'une des faces latérales partiellement ouvertes de l'enveloppe de protection 40.

Les assemblages de languettes 83, 86 sont rabattus et soudés par faisceau laser sur la branche 80A.

La branche 80A de l'équerre présente deux épaulements latéraux 92, 94, formant des butées d'appui sur les assemblages de languettes 83, 86.

La branche 80B de l'équerre présente une encoche 96 sur une extrémité libre opposée à la branche 80A guidant le positionnement de l'équerre 80.

Les bornes de connexion 75 sont reliées aux équerres 80 par des broches conductrices traversant le couvercle 29 et soudées sur les branches 80B des équerres.

Le flan 45 visible sur la figure 3 et formant après pliage l'enveloppe de protection 40, présente une forme générale rectangulaire et délimite successivement d'un bord à l'autre, en étant séparés par des lignes de pliage parallèles, le pan 60, la première face principale 54, la face supérieure 58, la seconde face principale 52, le pan 64 et le prolongement 68, comme illustré sur la figure 3.

Le prolongement 68 et le pan 64 ont chacun une largeur inférieure à la largeur correspondante de l'enveloppe de protection 40, ménageant ainsi à leur extrémité des espaces libres 97, 98 de réception des congés 99, 100 présents aux bords du boîtier métallique 14.

Pour délimiter les ouvertures 87 de passage des pattes de connexion 70, le flan 45 comporte des rabats 110 adjacents à au moins une des faces principales. Les rabats 110 sont repliés à 90° par rapport aux faces principales. Les rabats 110 sont liés au pan 60 et à la face supérieure 58.

Comme visible sur la figure 3, le flan 45 présente, au niveau du prolongement de ses faces principales définissant les rabats 110, des encoches 120 dans le prolongement des lignes de pliage. Ces encoches 120 sont telles que les rabats 110 sont repliés « à l'intérieur » de l'espace délimité par l'enveloppe de protection 40. Par « à l'intérieur » il est entendu que les rabats 110 se trouvent en retrait vers l'intérieur par rapport à l'espace délimité par l'enveloppe de protection 40 comme illustré sur la figure 2, et plus en détail sur la figure 5.

Les rabats 110, les pans 60, 64 repliés l'un sur l'autre, ainsi que le prolongement 68 comportent des trous 125 pour rendre possible la circulation de l'électrolyte.

Selon un second mode de réalisation, non représenté, le prolongement 68 est supprimé et le flan comporte seulement deux faces principales 52, 54 et deux pans 60, 64 repliés l'un sur l'autre et se chevauchant sur l'essentiel de leur surface. Le pan 64 replié sur le plan 60 a alors un pan coupé.

Selon un troisième mode de réalisation, non représenté, le prolongement 68 prolonge le pan 60 et non pas le pan 64. Le prolongement 68 est alors replié sur le pan 60, et le pan 64 est replié sur le pan 68.

En variante, le pan 64 est prolongé par au moins deux prolongements successifs repliés les uns sur les autres en boustrophédon et repliés sur le pan 64, le pan 64 étant luimême replié sur le pan 60.

Pour le procédé d'assemblage de la cellule de stockage d'énergie 10, l'empilement de feuillets d'électrode 30 est préemballé dans le préemballage de protection 35. Le boitier métallique 14 est mis en forme à l'exclusion du couvercle 29 qui n'est pas placé pour obturer le boitier. Le flan 45 est découpé suivant la figure 3.

Le flan 45 est mis en forme par pliage selon les lignes de pliage pour former l'enveloppe de protection 40. Le flan 45 est mis en forme directement autour de l'empilement de feuillets d'électrode préemballé. Les deux pans 60 et 64 sont repliés l'un sur l'autre. Le prolongement 68 est ensuite replié sur le pan 64.

La mise en forme du flan 45 en l'enveloppe de protection 40 comprend une étape de soudure réalisée sur la face 56 formant le fond de l'enveloppe de protection 40, pour souder entre eux les pans repliés 60, 64 et 68. Chaque équerre 80 est positionnée de façon à ce que la branche 80B de l'équerre repose sur la face supérieure 58 de l'enveloppe de protection 40.

Les assemblages de languettes 83, 86 venant de chaque face de l'empilement de feuillets d'électrode 30 sont rabattus et soudés par faisceau laser sur les branches 80A des équerres.

Le couvercle 29, comprenant les deux bornes de connexion 75 est posé sur la face supérieure 58 de l'enveloppe de protection 40. Les bornes de connexion 75, sont reliées aux équerres 80 par des broches conductrices traversant le couvercle 29 et soudées sur les branches 80B des équerres.

Le module électrique 12 maintenant formé, est inséré dans le boitier métallique 14. Le boitier métallique 14 est empli d'un électrolyte. Le couvercle rapporté 29 vient fermer de manière hermétique le boitier métallique 14.

La surépaisseur sur la face 58 de l'enveloppe de protection engendrée par le repli l'un sur l'autre d'au moins deux pans 60, 64, du flan 45 protège l'empilement de feuillets d'électrode 30 d'un potentiel endommagement par contact avec les congés réduisant la largeur du fond 28 du boitier de réception métallique 14. L'empilement de feuillets d'électrode 30 est rehaussé à l'intérieur du boitier métallique 14 et les feuillets d'électrode sont suffisamment espacés de la proximité immédiate du fond 28 dans laquelle la largeur du boitier 14 est réduite par la zone des congés reliée au fond 28, même si les feuillets d'électrode s'étendent éventuellement encore entre les deux congés mais à proximité des parois latérales du boitier 14, là où l'influence des congés est plus réduite. La hauteur de rehaussement est variable d'un minimum de deux pans 60, 64 repliés l'un sur l'autre, à un maximum de N pans repliés les uns sur les autres en boustrophédon, N étant le nombre de pans repliés nécessaires pour rehausser l'empilement de feuillets d'électrode juste au-dessus des congés des angles du boitier métallique 14.

Chaque pan 60, 64, 68 replié comportant des trous, la circulation de l'électrolyte à travers l'enveloppe de protection 40 et le préemballage 35 est assurée.

La présente invention porte de nombreux avantages. La protection de l'empilement de feuillets d'électrode est assurée par les pans repliés et est effectuée sans ajout de pièce supplémentaire, les pans repliés étant venus de matière avec le flan. La solution ainsi proposée n'engendre pas de coût supplémentaire de fabrication de pièce comme cela serait le cas si une cale de fond devait être utilisée.

La soudure de mise en forme du flan en l'enveloppe de protection étant effectuée sur la face formant le fond de l'enveloppe de protection, le recouvrement de deux pans nécessaire pour la soudure est déjà inclus dans les pans repliés les uns sur les autres pour protéger l'empilement de feuillets d'électrodes. Dans la littérature, il est connu de souder l'enveloppe de protection sur ses faces latérales. Ce procédé nécessite un recouvrement des deux parties à souder sur les faces latérales et engendre ainsi une perte d'espace et par conséquent, une perte de potentiel gain énergétique, par rapport à une solution où une seule épaisseur de l'enveloppe de protection n'est présente sur les faces latérales.

## Revendications

1. Cellule de stockage d'énergie (10) comportant un module électrique (12) comprenant :
- un empilement de feuillets d'électrode (30),
- une enveloppe de protection (40) entourant l'empilement de feuillets d'électrode (30), l'enveloppe (40) comportant au moins un flan (45) replié autour de l'empilement de feuillets d'électrode (30),
**caractérisée en ce que**, suivant au moins une face du module électrique (12), le flan (45) présente au moins deux pans (60, 64) repliés l'un sur l'autre et se chevauchant sur l'essentiel de leur surface.

2. Cellule de stockage d'énergie (10) selon la revendication 1, dans laquelle les deux pans (60, 64) repliés l'un sur l'autre sont à l'écart l'un de l'autre suivant l'étendue du flan (45).

3. Cellule de stockage d'énergie (10) selon l'une quelconque des revendications précédentes, dans laquelle au moins un pan replié (64) est prolongé par au moins un prolongement (68) replié sur l'essentiel de la surface du pan replié (64).

4. Cellule de stockage d'énergie (10) selon l'une quelconque des revendications précédentes, dans laquelle le module électrique (12) a une forme parallélépipédique et le flan (45) délimite quatre faces principales successives deux à deux opposées (52, 54, 56, 58), l'une des faces présentant les au moins deux pans (60, 64) repliés l'un sur l'autre.

5. Cellule de stockage d'énergie (10) selon l'une quelconque des revendications précédentes, dans laquelle le module électrique comporte des pattes de connexion (70) reliant les feuillets d'électrode (30) entre eux et étant prolongées par des bornes de connexion de la cellule (75), et l'enveloppe de protection (40) comporte des ouvertures (87) de passage des pattes de connexion (70).

6. Cellule de stockage d'énergie (10) selon les revendications 4 et 5, dans laquelle le flan (45) comporte des rabats (110) adjacents à au moins une des faces principales (52, 54, 56, 58), lesquels rabats sont repliés à 90° par rapport aux faces principales et délimitent les ouvertures (87) de passage des pattes de connexion (70).

7. Cellule de stockage d'énergie (10) selon la revendication 6, dans laquelle les bornes de connexion (75) s'étendent sur l'une des faces principales (58).

8. Cellule de stockage d'énergie (10) selon l'une quelconque des revendications précédentes, dans laquelle les pans (60, 64) repliés l'un sur l'autre comportent des trous (125).

9. Cellule de stockage d'énergie (10) selon l'une quelconque des revendications précédentes, dans laquelle l'enveloppe de protection (40) est en polyéthylène et/ou en polytéréphtalate d'étylène et/ou en polypropylène.

10. Cellule de stockage d'énergie (10) selon l'une quelconque des revendications précédentes, dans laquelle la cellule de stockage d'énergie comporte un boitier métallique (14) contenant le module électrique (12), la face du module (12) présentant au moins deux flancs étant en contact avec le boitier métallique (14).

11. Procédé d'assemblage d'une cellule de stockage d'énergie (10) selon l'une quelconque des revendications précédentes comportant les étapes :
- fourniture de l'empilement de feuillets d'électrode (30) ; et
- mise en forme par pliage d'un flan (45) en une enveloppe de protection (40) de l'empilement de feuillets d'électrode (30),
**caractérisé en ce qu'**il comporte le repli l'un sur l'autre d'au moins deux pans (60, 64) du flan (45) suivant au moins une face du module électrique (12), les pans repliés (60, 64) se chevauchant sur l'essentiel de leur surface.
